Europäisches Patentamt

European Patent Office

Office européen des brevets

(19)

(11) Publication number: **0 368 616**
**A2**

(12) **EUROPEAN PATENT APPLICATION**

(21) Application number: **89311511.3**

(22) Date of filing: **07.11.89**

(51) Int. Cl.5: **G11B 11/10**

(30) Priority: **07.11.88 JP 279347/88**

(43) Date of publication of application:
**16.05.90 Bulletin 90/20**

(84) Designated Contracting States:
**DE FR GB**

(71) Applicant: **HITACHI MAXELL LTD.**
**1-88 Ushitori-1-chome**
**Ibaraki-shi Osaka(JP)**

(72) Inventor: **Daimon, Hideo**
**7-21-4015, Togashira 7-chome**
**Toride-shi(JP)**
Inventor: **Fujiwara, Hideo**
**24-9, Keyakidai-2-chome Moriyamachi**
**Kitasoma-gun Ibaraki-ken(JP)**

(74) Representative: **Cresswell, Thomas Anthony**
**et al**
**J.A. Kemp & Co. 14 South Square Gray's Inn**
**London WC1R 5EU(GB)**

(54) **Magneto-optical recording medium and production process.**

(57) A magneto-optical recording medium comprises a porous anodized film composed of aluminium or aluminium alloy formed on a substrate and a magnetic material filled into the micropores of the porous anodized film, wherein the magnetic material filled into the micropores has a height ranging from 0.1 to 0.5 μm.

The magneto-optical recording medium has a large magneto-optical merit figure and excellent reproduction characteristics, and a practical preformat. It is produced by forming a porous anodized aluminium or aluminium alloy thin film on a substrate and filling the micropores in the porous anodized film with a magnetic material.

## MAGNETO-OPTICAL RECORDING MEDIUM AND PRODUCTION PROCESS

The present invention relates to a magneto-optical recording medium and a process for producing the medium, and more specifically, to a magneto-optical recording medium comprising a porous anodized film composed of aluminium or aluminium alloy formed on a substrate and a magnetic material filled into the micropores of the porous anodized film and a production process therefor.

So-called magneto-optical recording media have been described as rewritable optical recording media which read out a signal making use of a magnetic Kerr effect. This magneto-optical recording medium records a signal when an external magnetic field is imposed while locally irradiating with photo-energy such as a laser beam the surface of a magnetic member so as to heat the irradiated portion up to or above the Curie temperature; a signal is read by irradiating the surface of the magnetic member with a light flux having a particular plane of polarization, such as a laser beam, and detecting a change in the plane of polarization of reflected light with respect to the plane of polarization of the irradiating light beam.

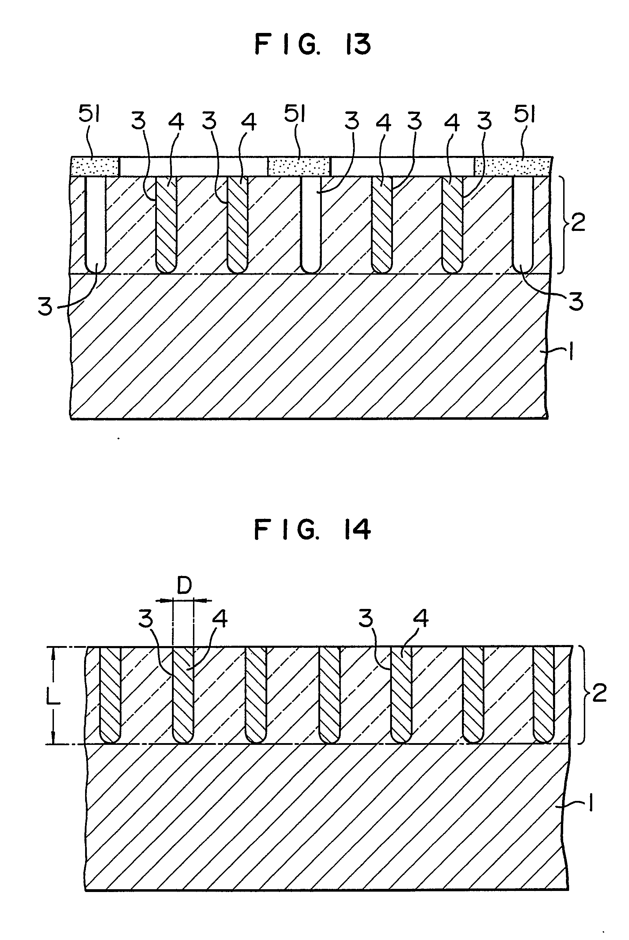

There was proposed a magneto-optical recording medium as shown. in Figure 14 which comprises a porous anodized film 2 formed on the surface of a substrate 1 composed of aluminium or aluminium alloy and a magnetic material 4, such as pure iron, filled into the microminiature holes or micropores 3 of the porous anodized film 2 by electrolytic deposition [refer to Japanese Patent Kokai (Laid-Open) No. 59-72663 and Japanese Patent Kokai No. 61-229248]. A signal may readily be read from this magneto-optical recording medium by irradiating the edge plane of the magnetic material 4 with linearly polarized light when the plane of polarization of the reflected light is rotated with respect to the plane of polarization of the irradiating light by an angle (hereinafter, referred to as a Kerr rotation angle) larger than that of a conventional magneto-optical recording medium using a perpendicular magnetization film.

Note that the axis of easy magnetization of material 4 must be perpendicular to the film surface in the above magneto-optical recording medium, and to achieve perpendicular magnetization of the film the ratio of the height L of the magnetic material to the diameter D of material 4 must be set to a predetermined value. Japanese Patent Kokai No. 59-72663 proposes to set this ratio to $L/D \geq 20$.

Since it is not the magnitude of the Kerr rotation angle but the intensity of the reflected light that contributes to the output signal of a magneto-optical recording medium, a magneto-optical figure of merit represented by $\sqrt{R} \cdot \theta k$, (where the effective reflection factor of the magneto-optical recording medium is R and the Kerr rotation angle is $\theta k$) must be larger to provide a good reproduction characteristic.

The magneto-optical recording medium shown in Figure 14, however, has a problem in that the effective reflection factor R is smaller due to the opacity of the magnetic material 4 filled into the micropores 3 of the anodized film 2 composed of aluminium or aluminium alloy. The magneto-optical recording medium shown in Figure 14 is expensive to manufacture since the porous anodized film 2 is manufactured by anode oxidation of the surface of aluminium or aluminium alloy and expensive high purity aluminium must be used as the substrate material; in addition the surface on which the porous anodized film 2 is formed must be highly polished.

Furthermore, use of a preformat such as a prepit pattern for indicating a guide groove for the light beam or the address of a recording region is necessary to enable a signal to be recorded in this type of magneto-optical recording medium and for the signal recorded therein to be reproduced. No method of manufacturing the preformat, however, has been conventionally proposed and thus this kind of magneto-optical recording medium cannot actually be used at present.

The first object of the present invention is to solve the above drawbacks of the prior technology by providing a magneto-optical recording medium having a large effective reflection factor and a large Kerr rotation angle and thus having a large magneto-optical figure of merit and excellent reproduction characteristics.

The second object of the present invention is to provide a less expensive magneto-optical recording medium by using a substrate of material other than high purity aluminium or aluminium alloy.

Further, the third object of the present invention is to provide a magneto-optical recording medium including a preformat and arranged so as to enable the recording and reproduction of a signal in practice and a process for producing a preformat particularly suitable for this type of magneto-optical recording medium.

To achieve the first object, the present invention provides a magnetic material filling in the micropores of a porous anodized film, the filling having a height ranging from 0.1 to 0.5 $\mu$m.

To achieve the second object, the present invention provides a substrate composed of a ma-

2

terial other than aluminium and aluminium alloy, such as a metal material, a ceramic material or a resin material, and a thin film composed of aluminium or aluminium alloy on the substrate, the thin film having been subjected to an anodizing treatment and having a magnetic material filling in the micropores of the porous anodized film formed by the treatment.

To achieve the third object, the present invention provides that a mask or photoresist layer corresponding to a desired preformat pattern is formed on the porous anodized film composed of aluminium or aluminium alloy on a substrate before the magnetic material is filled into the micropores to prevent the magnetic material from being filled into the portion where the mask is formed.

The inventors of the present invention have found that there is a close relationship between the height of the magnetic material filled into the micropores of a porous anodized film and the reflection factor of light irradiating the porous anodized film and that, when the height of the magnetic material filled into the micropores is 0.5 $\mu$m or less, a high light reflection factor can be obtained, whereas when the height is more than 0.5 $\mu$m, the reflection factor of the light is abruptly reduced.

On the other hand, the inventors have found that there is also a close relationship between the height of the magnetic material filled into the micropores of the porous anodized film and the coercive force of the porous anodized film and the Kerr rotation angle, and (1) as the length of the magnetic material is made shorter, the coercive force and the Kerr rotation angle are lowered, but (2) when the height of the magnetic material filled into the micropores of the porous anodized film is 0.1 $\mu$m or more, a coercive force of about 127.4 KA/m and a Kerr rotation angle of about 0.8 degree or more can be securely obtained so that no problem arises in practical application of the technology.

From the above facts, a magneto-optical recording medium having a high light reflection factor (R) and a high Kerr rotation angle ($\theta$k) and thus having a high magneto-optical figure of merit ($\sqrt{R} \cdot \theta$k) and excellent reproduction characteristics can be provided by adjusting the height of the magnetic material filled into the micropores of the porous anodized film within the range from 0.1 to 0.5 $\mu$m from the top to the bottom thereof.

When aluminium or aluminium alloy is used as a substrate material, the material is expensive and the surface of the substrate must be flattened by polishing so that the manufacturing cost of the magneto-optical recording medium is high. On the other hand, when any arbitrary material other than aluminium or aluminium alloy, such as a metal material, ceramic material or resin material is used, a less expensive material can be suitably selected so that the materials cost can be reduced. Further, when a ceramic material or resin material is used, polishing to flatten the surface is not necessary so that the manufacturing cost of the magneto-optical recording medium can be further reduced.

Since the porous anodized film of aluminium or aluminium alloy transmits light (ie is a transparent film), the reflection factor for light irradiating those portions where the micropores of the porous anodized film is not filled is different from that for light irradiating the portion where the micropores of the porous anodized film are filled with the opaque magnetic material.

Accordingly, when a desired preformat pattern is applied to the porous anodized film, the preformat can be read by the difference of the light reflection factors and a signal can be recorded and reproduced.

As described above, according to the magneto-optical recording medium of the present invention, since the height of the magnetic material filling in the micropores of the porous anodized film is adjusted to the optimum, both the light reflection factor and the Kerr rotation angle can be increased, whereby a magneto-optical recording medium having a high magneto-optical figure of merit and excellent reproduction characteristics can be provided.

Further, the substrate cost can be reduced and the anodic oxidation and electrodeposition of magnetic material into the micropores of the porous anodized film can be carried out effectively so as to reduce the manufacturing cost of the magneto-optical recording medium by forming a thin film composed of aluminium or aluminium alloy on a substrate composed of a material other than aluminium or aluminium alloy, anode oxidation of this thin film and then filling the micropores of the porous anodized film with magnetic material to the appropriate height.

Furthermore, when regions corresponding to a desired preformat pattern are formed in which the micropores are not filled with magnetic material the preformat can be read out by the difference of the reflection factors of light in the regions where there is magnetic material filling and the regions where there is no magnetic material filling, a magneto-optical recording medium may be obtained which can be used in practice.

Figure 1 is a cross sectional view of a main part of a magneto-optical recording medium according to a first embodiment;

Figure 2 is a diagram explanatory of the relationship between the length of a magnetic material filled into micropores and the reflection factor of light;

Figure 3 is a diagram explanatory of the relationship between the length of a magnetic material filled into micropores and the coercive force and Kerr rotation angle;

Figures 4 - 7 are cross sectional views of main parts of other embodiments according to the present invention;

Figure 8 is a plan view of a main part of another embodiment according to the present invention;

Figures 9 - 13 are cross sectional views of main parts of a magneto-optical recording medium according to the present invention at various stages of manufacture; and

Figure 14 is a cross sectional view of a main part of a conventional magneto-optical recording medium.

In the Figures, numerals are used to indicate the feature of the drawings as follows 1: substrate composed of aluminium or aluminium alloy, 2: porous anodized film, 3: micropore, 4: magnetic material, 11: substrate composed of material other than aluminium or aluminium alloy, 12: thin film composed of aluminium or aluminium alloy, 21: base member, 22: adhesive, 31: signal pattern, 31a: pregroove, 31b: prepit, 41: region where magnetic material is not filled, 51: photoresist layer, 52: cutting light.

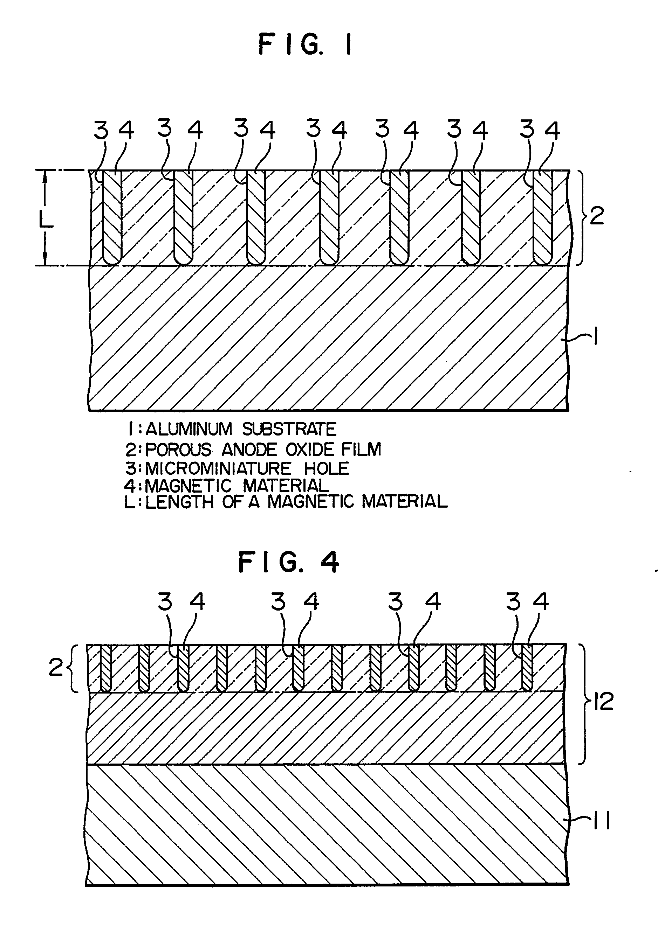

The first embodiment of the present invention will be described with reference to Figure 1.

A magneto-optical recording medium of the first embodiment has the same arrangement as the conventional magneto-optical recording medium shown in Figure 14 except that the magnetic material filled into the micropores of a porous anodized film has optimum length. More specifically, the porous anodized film 2 is formed on the surface of a substrate 1 composed of aluminium or aluminium alloy and a magnetic material 4 such as pure iron is filled into the micropores 3 of the porous anodized film 2.

Substrate 1 is composed of aluminium having a purity of 99.99% or more or alloy composed aluminium of high purity to which an additive element such as magnesium is added. The substrate 1 is polished to have a surface roughness of 0.02 $\mu$m or less before it is subjected to anode oxidation. Note that the outside configuration of the substrate 1 may be arbitrarily formed to a shape, such as a disc, tape or card so that it satisfies any requirements for the location where it is mounted. Of course, no restriction is imposed on the size of the substrate 1 and thus it may be formed to have any size, as necessary.

The porous anodized film 2 is formed by any usual anodic oxidation reaction. For example, the reaction is carried out by immersing substrate 1 in a water solution containing acid such as sulphuric acid, chromic acid or oxalic acid and a DC voltage or an AC/DC superimposed voltage is imposed thereon while the solution is being stirred. Note that, in some instances, the substrate 1 may be immersed in a mixed acid solution containing 1 - 30 wt% of sulfamic acid and 0.1 - 1 wt% of phosphoric acid after anodic oxidation reaction to enlarge the pore diameter of the micropores 3 of the porous anodized film 2 and to improve the uniformity of the pre diameter from the upper edge to the lower edge thereof.

Although any magnetic material may be used as the above magnetic material 4, in particular, pure iron or an iron alloy composed of pure iron and an additive element such as cobalt or nickel, added thereto is preferably used.

The above magnetic material 4 is filled into the above micropores 3 by any usual method of electrolytic deposition treatment. For example, the treatment is carried out by immersing the substrate 1 on which the porous anodized film 2 is formed in an electrolytic solution containing a salt of a magnetic metal and an AC current is imposed thereon. The height L of the magnetic material 4 filled into the micropores 3 is adjusted by controlling for instance the concentration of electrolyte in the electrolytic solution, the size of the imposed current, or the treatment time.

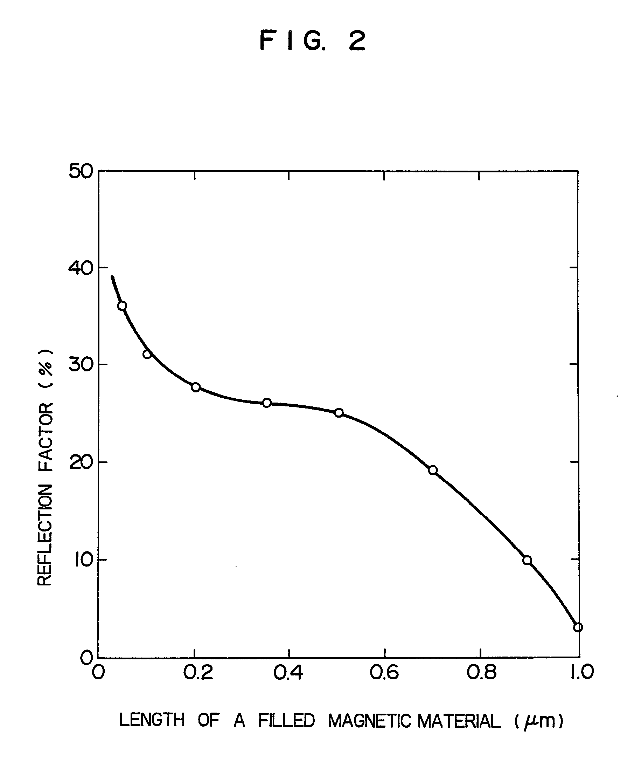

Figure 2 shows the relationship between the height L of the magnetic material 4 filled into the micropores 3 of the porous anodized film 2 and the reflection factor of light irradiating the porous anodized film 2. As apparent from Figure 2, when the height L of the magnetic material 4 filled into the micropores 3 is made 0.5 $\mu$m or less, a high light reflection factor can be obtained, whereas when the height L is more than 0.5 $\mu$m, the light reflection factor is abruptly lowered.

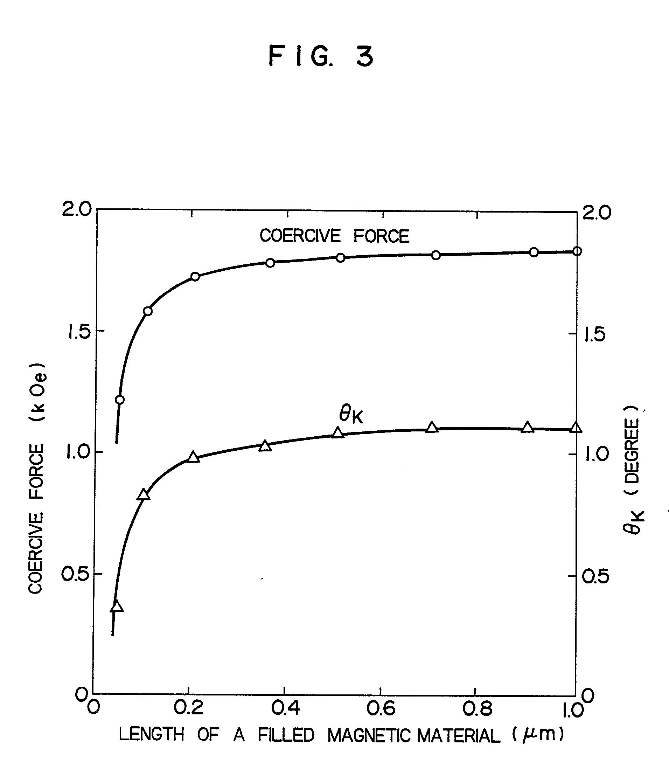

Figure 3 shows the relationship between the length L of the magnetic material 4 filled into the micropores 3 of the porous anodized film 2 and the coercive force of the porous anodized film 2 and Kerr rotation angle. As apparent from Figure 3, the shorter the height L of the magnetic material 4 filled into the micropores 3, the more the coercive force and the Kerr rotation angle are reduced. When, however, the height L is set to 0.1 $\mu$m or more, a coercive force of about 127.4 KA/m or more and a Kerr rotation angle of about 0.8 degree or more can be securely obtained.

In the magneto-optical recording medium of the above first embodiment, since the height of the magnetic material 4 filled into the micropores 3 of the porous anodized film 2 is adjusted a range of 0.1 - 0.5 $\mu$m, both the light reflection factor and the Kerr rotation angle are high and thus the magneto-optical figure of merit is increased giving an improved reproduction property

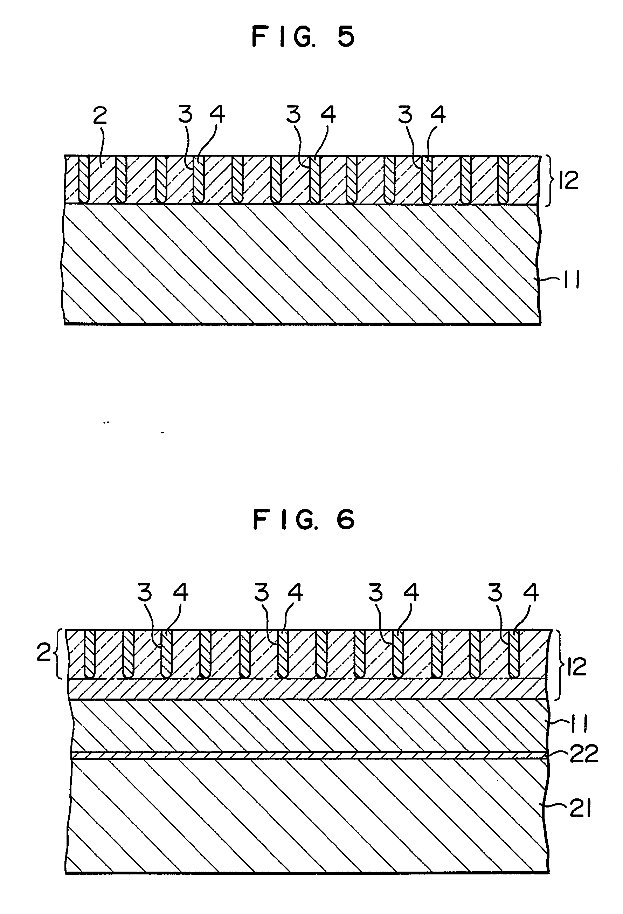

Next the second embodiment of this invention will be described with reference to Figure 4.

The magneto-optical recording medium of the second embodiment is characterized in that a thin film 12 composed of aluminium or aluminium alloy is on a substrate 11 composed of a material other than aluminium or aluminium alloy, the thin film 12 is subjected to an anode oxidation treatment and a magnetic material 4 is filled into the micropores 3 of the thus formed porous anodized film 2.

The above substrate 11 can be composed of a material selected from, for example, a metal material other than aluminium or aluminium alloy, a ceramic material such as glass, or a resin material such as a heat resistant resin. Note that when a resin material is used as the substrate material, the substrate 11 may be either rigid or flexible.

Any known thin film forming means such as vacuum vapor deposition or sputtering is applicable to the formation of the thin film 12 on the substrate 11.

An example of specific methods of manufacturing the magneto-optical recording medium according to the second embodiment with be described below.

First, aluminium was vacuum deposited on a polyimide film substrate having a thickness of 50 $\mu$m to a thickness of 3.0 $\mu$m. The vapor deposition at this time was carried out with the substrate at 25°C, and under a pressure of $4 \times 10^{-4}$ Pa and with a vapor deposition speed of 3 nm/sec.

Next, the substrate was immersed into a sulphuric acid bath and a current having a current density of 1 A/dm$^2$ was imposed to form a porous anodized film having a thickness of 1 $\mu$m on the surface of the aluminium film.

Next, the substrate on which the porous anodized film was formed immersed in a bath containing 1 wt% of phosphoric acid to enable the pore diameter of the micropores of the porous anodized film to be enlarged to 170 Å.

Finally, the substrate, after being subjected to the pore diameter enlarging treatment, was immersed in a plating bath to fill the micropores of the porous anodized film with a magnetic material. The composition of the plating bath was: 15 g/300 ml of Mohr's salt, 4.5 g/300 ml of boric acid, 0.6 ml/300 ml of glycerin and the pH was adjusted to 3.0 by 2N of sulphuric acid. Electric power was supplied using an AC/DC superimposed power supply with an alternating current of 500 Hz, 25 V superimposed to a direct current bias, and the adjustment was such that + 10 V was imposed on the opposite electrode and - 15 V was imposed on the alumetized side electrode.

Since the magneto-optical recording medium of the second embodiment has a substrate composed of a material selected from a material other than aluminium or aluminium alloy, such as a metal material, a ceramic material such as glass or a resin material such as heat resistant resin, the substrate material is less expensive than aluminium or aluminium alloy. In addition, when a ceramic material or resin material is used as the substrate material, polishing to flatten the surface of the substrate is not necessary with the result of a further reduction in a manufacturing cost.

Although, in the second embodiment, the porous anodized film 2 is formed on the surface layer portion of the thin film 12 itself formed on the substrate 11, it is also possible to make the thin film 12 thinner such that the thin film 12 as a whole serves as the porous anodized film 2, as shown in Figure 5. In the magneto-optical recording medium of this third embodiment, the period of time during which the porous anodized film 2 is formed can be readily controlled. In addition, it is possible to use recording/reproducing light incident on the substrate 1 side by forming the substrate 11 of a transparent member, whereby the freedom of design of the recording/reproducing system using this magneto-optical recording medium can be improved.

Next, the fourth embodiment of the present invention will be described with reference to Figure 6.

As shown in Figure 6, the magneto-optical recording medium of this embodiment, which comprises a thin film 12 composed of aluminium or aluminium alloy formed on a film-shaped substrate 11, a porous anodized film 2 formed on the surface of the thin film 12 and a magnetic material filled into the micropores 3 of the porous anodized film 2, is bonded to a base member 21 of high rigidity composed of an arbitrary material selected from metal materials, ceramic materials, and resin materials through an adhesive 22.

When a film-shaped substrate 11 is used, the processes of forming the thin film composed of aluminium or aluminium alloy on the surface of the substrate, subjecting the thin film to an anode oxidation treatment and filling the micropores 3 of the porous anodized film 2 with the magnetic material can be carried out effectively.

Consequently, the use of a magneto-optical recording medium of the fourth embodiment can increase productivity and mass-productivity even when the processes of punching out a magneto-optical recording medium of a desired configuration from the film-shaped substrate 11 and bonding the magneto-optical recording medium to the base member 21 are taken into consideration.

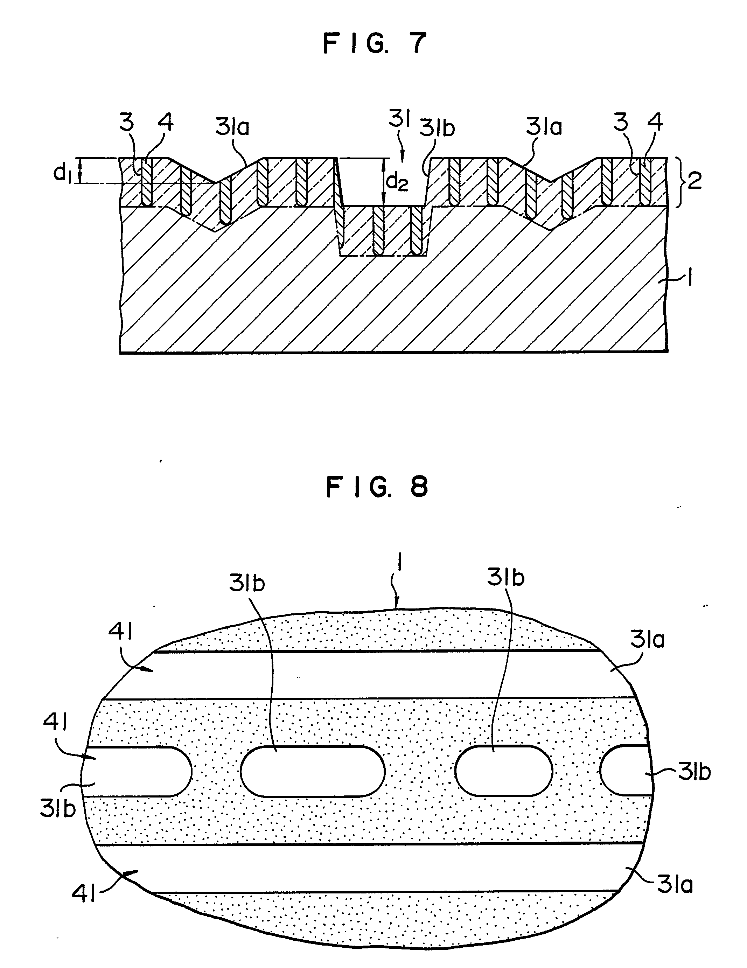

Next, the fifth embodiment of the present invention will be described with reference to Figure 7.

As shown in Figure 7, the magneto-optical recording medium of this embodiment comprises a substrate 1 composed of aluminium or aluminium alloy and having a signal pattern 31 with a varying cross section formed thereon, a porous anodized film 2 formed on the surface of the signal pattern 31 and a magnetic material 4 filled into all the micropores 3 of the porous anodized film 2.

The diameters of the micropores are 100 to 800 Å and the height of each micropore is from 300 to 2,500 Å.

The number of micropores 3 in a prepit width of about 0.48 micron meter is less than about 16 holes, and in a pregroove width of about 0.56 micron meter is less than 19 holes.

The above signal pattern 31 is arranged such that it includes shallow groove-shaped pregrooves 31a for guiding recording/reproducing light and deep concave prepits 31b for indicating the boundary of recording regions, the addresses of the recording regions or the like. These pregrooves 31a and prepits 31b are formed in such a manner that they have different depths from one another so as to provide a contrast in the intensity of reflected light when irradiating with reproducing light. As an example, assuming that the reproducing light has a wavelength represented by $\lambda$, the pregrooves 31a are formed to a depth $d_1$ of $\lambda/6n$ - $\lambda/8n$ and the prepits 31b are formed to depth $d_2$ of $\lambda/4n$ - $\lambda/6n$ (n is a positive integer).

When the reproducing light is irradiated on the portion where the pregrooves 31a or the prepits 31b are defined, the intensity of the reflect light is reduced due to interference and diffraction of the light. On the other hand, when the reproducing light is irradiated on portions away from the pregrooves 31a or the prepits 31b, the intensity of the reflected light is not reduced because interference and diffraction do not arise. Therefore, the detection of the intensity of the light reflected from the magneto-optical recording medium by a light detecting device enables the pregrooves 31a and the prepits 31b to be read out.

Although the above embodiment is described with reference to the case where a varying signal pattern 31 is formed on the substrate 1 composed of aluminium or aluminium alloy and the surface of the substrate 1 is subjected to anode oxidation treatment to form the porous anodized film 2, the same processes of formation can be employed even when the substrate is composed of a material other than aluminium or aluminium alloy.

When information is detected by a signal of dark or light reflection reproduced by a prepit or a pregroove, it is also possible not to anodize the prepit portion or pregroove portion of an aluminium film so that there is no anodized film 2 or no micropore 3, whereas the anodized and filled micropores are formed elsewhere.

Alternatively the micropores of the anodized film 2 need not be filled with magnetic material in the prepit portions and pregroove portions thereof.

Next, the sixth embodiment of the present invention will be described with reference to Figure 8.

As shown in Figure 8, in the magneto-optical recording medium of this embodiment, regions 41 are selectively formed in which the porous anodized film 2 is not filled with a magnetic material 3 and a desired signal pattern 31 is formed by the arrangement of the regions 41. In Figure 8, 31a designates pregrooves and 31b designates prepit trains.

Since the porous anodized film 2 composed of aluminium or aluminium alloy is transparent to light, the portion having micropores 3 filled with the magnetic material and the portion having micropores 3 not filled with the magnetic material have different light reflection factors. Therefore, the detection of the intensity of the light reflected from the magneto-optical recording medium by a light detecting device enables the pregrooves 31a and the prepits 31b to be read out.

The above magneto-optical recording media of the fifth and sixth embodiments are applicable in recording/reproduction of an actual signal since they have the desired signal pattern 31 formed thereon.

A method for manufacturing the magneto-optical recording medium according to the sixth embodiment will be described below.

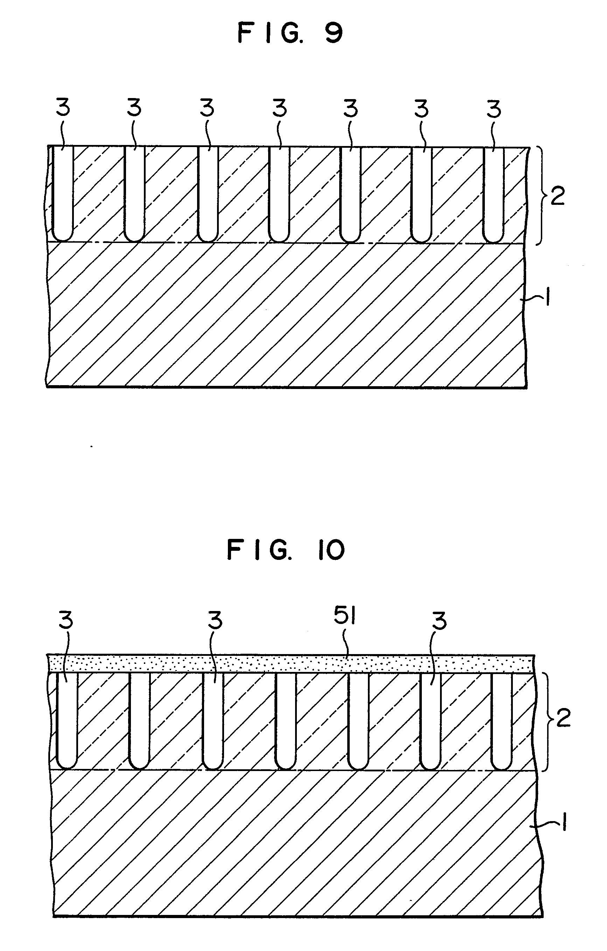

First, as shown in Figure 9, the substrate 1 composed of aluminium or aluminium alloy is subjected to an anode oxidation treatment to form the porous anodized film 2 on the surface of the substrate 1.

Next, as shown in Figure 10, a photoresist layer 51 is formed over the whole surface of the porous anodized film 2.

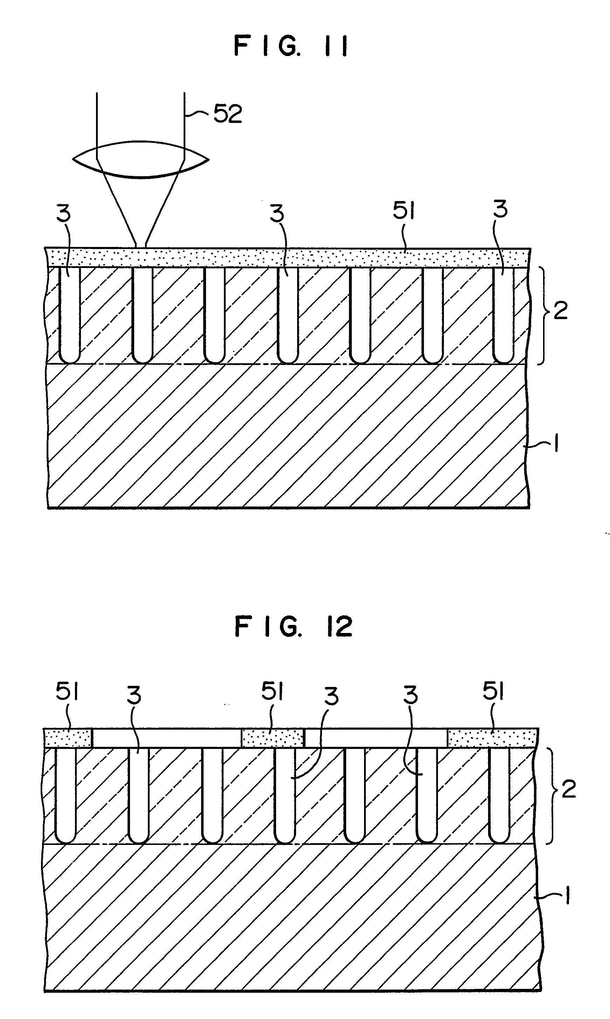

Next, as shown Figure 11, the photoresist layer 51 is irradiated with cutting light 52 to expose a desired preformat pattern; two methods are applicable: in one method, the cutting light 52 is subjected to a signal modulation by a desired preformat signal and in the other, a mask having through holes corresponding to a desired preformat is deposited on the photoresist layer 51 and the photoresist layer 51 is irradiated with cutting light 52 of uniform intensity from outside the mask.

Next, the exposed substrate 1 is developed, the portions of photoresist layer 51 exposed to the cutting light 52 are left and the portions of photoresist layer not irradiated are removed, as shown in Figure 12.

Next, as shown in Figure 13, the magnetic material 4 is filled by any usual method into the micropores 3 of the porous anodized film 2 at the portion from which the photoresist layer 51 is removed.

Finally, the photoresist layer 51 remaining on the surface of the porous anodized film 2 is removed, whereby the magneto-optical recording medium having the signal pattern 31 shown in Figure 8 is obtained.

Although the above manufacturing method is described with reference to the case of the magneto-optical recording medium having the substrate 1 composed of aluminium or aluminium alloy, the same kind of the signal pattern can be applied to a magneto-optical recording medium having a substrate composed of a material other than alumninium or aluminium alloy.

## Claims

1. A magneto-optical recording medium comprising a substrate, and a porous anodized aluminium or aluminium alloy film on the substrate, having a magnetic material filling in at least some of the micropores in the porous anodized film, wherein the magnetic material filling in the micropores has a height ranging from 0.1 to 0.5 $\mu$m.

2. A magneto-optical recording medium according to claim 1, wherein the substrate is composed of aluminium or aluminium alloy and the surface of the substrate is anodized and is porous.

3. A magneto-optical recording medium according to claim 1, wherein the substrate is composed of a material other than aluminium or aluminium alloy, having a thin film composed of aluminium or aluminium alloy on the surface of the substrate and at least the surface of the thin film is anodized.

4. A magneto-optical recording medium according to claim 1, wherein the substrate is composed of a metal material, a ceramic material, or a resin material.

5. A magneto-optical recording medium according to any of claims 1 to 4, wherein the back surface of the substrate is bonded to a base member of high rigidity.

6. A magneto-optical recording medium according to any of claims 1 to 5, wherein the substrate is disc shaped, tape shaped or card shaped.

7. A magneto-optical recording medium according to any of claims 1 to 6, wherein the substrate is flexible.

8. A magneto-optical recording medium according to any of claims 1 to 7, wherein the substrate has a signal pattern of varying cross section formed thereon.

9. A magneto-optical recording medium according to any of claims 1 to 8, wherein the substrate has a signal pattern formed thereon and the signal pattern comprises regions where the micropores of the anodized film are filled with magnetic material and regions where the micropores of the anodized film are not filled with magnetic material.

10. A process for producing a magneto-optical recording medium according to any one of claims 1 to 9 comprising:

(a) forming a porous anodized film composed of aluminium or aluminium alloy on a substrate; and

(b) filling at least some of the micropores of the porous anodized film with a magnetic material.

11. A process for producing a magneto-optical recording medium, comprising:

(a) forming a porous anodized film composed of aluminium or aluminium alloy on a substrate;

(b) forming a photoresist layer on the surface of the porous anodized film;

(c) imagewise irradiating the photoresist layer with cutting light;

(d) removing the unirradiated portion of the photoresist layer;

(e) filling the micropores in the portion of the porous anodized film from which the photoresist layer is removed with magnetic material; and

(f) removing the remaining photoresist layer.

# F I G. I

1: ALUMINUM SUBSTRATE
2: POROUS ANODE OXIDE FILM
3: MICROMINIATURE HOLE
4: MAGNETIC MATERIAL
L: LENGTH OF A MAGNETIC MATERIAL

# F I G. 4

# F I G. 2

REFLECTION FACTOR ( % ) vs LENGTH OF A FILLED MAGNETIC MATERIAL ( μm )

# F I G. 3

## F I G. 5

2    3  4    3  4    3  4

} 12

11

## F I G. 6

3  4    3  4    3  4    3  4

2 {

} 12

11

22

21

FIG. 7

FIG. 8

F I G. 9

F I G. 10

# F I G. II

# F I G. I2

F I G. 13

F I G. 14